# EUROPEAN PATENT SPECIFICATION

(11) **EP 1 375 426 B1**
(45) Date of publication and mention of the grant of the patent: **21.06.2006**
(21) Application number: 02016521.3
(22) Date of filing: 24.07.2002
(51) Int. Cl.: C01B 33/146, C01B 33/148, B01J 13/00

(54) **Process for increasing the particle size of colloidal silica**
Verfahren zur Erhöhung der Partikelgrösse einer kolloidaler Kieselsäure
Procédé pour augmenter la granulometrie d'une silice colloidale

(30) Priority: 30.06.2002 IR 38104035
(43) Date of publication of application: 02.01.2004
(73) Proprietor: Materials and Energy Research Center, Tehran (IR)
(72) Inventor: Dr. Cavus Falamaki, Alvand St. Esfarayen Alley, 16, Tehran (IR)
(74) Representative: RACKETTE Partnerschaft Patentanwälte

(56) References cited:
- US-A- 2 680 721
- US-A- 4 356 107
- RALPH K. ILER: "The Chemistry of Silica: Solubility, Polymerization, Colloid and Surface Properties and Biochemistry of Silica" September 1979 (1979-09) , JOHN WILEY AND SONS , NEW YORK XP002224997 * page 239-244; table 3.5 *
- BORTISHEVSKY V A ET AL: "The use of microwave energy for obtaining dry silica sol" 10TH INTERNATIONAL CRIMEAN CONFERENCE "MICROWAVE & TELECOMMUNICATION TECHNOLOGY", September 2000 (2000-09), XP010517133

## Description

### Background of the Invention

This invention relates to a new method for increasing the particle size of dilute (3-6 % wt SiO₂) silica sols from 2-4 nm up to 13.73mm using microwave hydrothermal heating. The resulting sol may be further concentrated by simple evaporation to the maximum level dictated by the average particle size, pH and Na2O content without loss of stability against gelling.

Concentrated silica sols have a wide range of applications in the industry such as ceramic binders in shell investment casting, catalyst binder and reactant for zeolite synthesis.

The art is familiar with the methods of producing silica sols. In the pioneering work of Bechtold and Snyder, U.S. Pat 2 574 902, initially a dilute silica sol is produced by ion exchange of a sodium silicate aqueous solution and part of it is further heated to produce a "heel". Then, further growth of the heel colloidal particles is achieved by adding progressively, under heating, the remaining part of the initial silica sol to the heel. Basically, the process consists of the production of an initial dilute sol of less than 4 nm particle size and further growth by the addition of "active silica". This method is referred to as a "build up process" in the well known related book of Ralph K. Iler, "The Chemistry of Silica, Solubility, Polymerization, Colloid and Surface Properties, and Biochemistry", John Wiley and Sons, 1979. Further improvement of the build up process consisted mainly in modifying the "active silica" source. The U.S. Pat 2 974 109 discloses the growth of the heel particles by adding a sodium silicate solution and an H-form ion exchange resin simultaneously under heating and careful control of pH and homogeneity. The aforesaid "build up process" results in a stable colloidal sol (mainly less than 12 wt % SiO₂) which is further concentrated to the maximum level dictated by the pH, average particle size and electrolyte concentration of the final product.

Another method for growing the particles of the initial silica sol is to autoclaving the latter in a temperature range of 100-350 °C for specific periods of time. Examples for such a process are given in the U.S.Pat.2 833 724 and 2 680 721. Referring to the above cited book of Ralph K. ller (The Chemistry of Silica), it is possible to grow silica particles of a 4 % wt SiO₂ with a pH range between 8-10 up to 12 nm in 10 minutes at 200°C and 15 nm in 3 hours at 160 °C (SiO₂/Na₂O molar ratio = 85).

The innovation of the present invention is that growth of particles is performed by employing microwave energy in autoclaves in much reduced times. For example, growing of 2-4 nm particles to 12 nm is possible in less than 120 seconds while reaching a maximum temperature of 160 °C at the end of the procedure according to the new method. The theoretical explanation is that the activation energy of the growth process is reduced from values higher than 15 kcal mole-1 to values less than 3 kcal mole-1 due to a change in the mechanism of the growth process

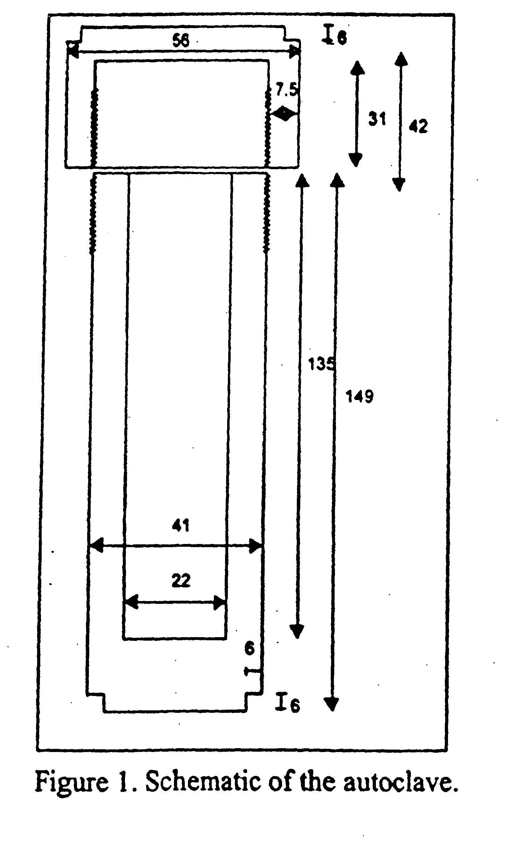

Figure 1 is a schematic of the autoclave used in the method of the present inventions. The numbers refer to mm.

### Description of the method

The starting material is a sodium silicate aqueous solution with a SiO₂/Na₂O molar ratio of 2-3.2. This is diluted to a 3-6 % wt SiO₂ and further ion exebange with an H-form resin to a pH in the range 2- 4.5. The H-form cation exchanger may be preferably conventional gel polystyrene sulphonated cation exchange resin like "PUROLITE C-100".

The ion exchange process may be performed in a fixed bed in a continuous manner or batchwise in a mixed vessel. The resin may be regenerated using a mineral acid like HCl or H₂SO₄. The initial sol may have a higher concentration of SiO₂ up to 12 % wt. A method for the production of such sols is mentioned in the U. S. Pat. 3 468 81J. Resin regeneration in this case needs an additional more frequent rinsing with sodium hydroxide solution because of some gel formation within and between resin particles during the ion exchange process.

The silica sol thus obtained is not stable. Therefor its pH is adjusted to 8-9.5 by the addition of solid sodium hydroxide or sodium hydroxide solution. On the other hand, the content of Na₂O in the final sol should be adjusted to give a SiO₂/Na₂O molar ratio of 30:1-130:1.

In the next step, the sol is put in a PTFE autoclave (see figure 1) so designed as to being able of withstanding a maximum operating pressure of 15-20 atm. Polyethylene autocetaves may also be used but are susceptible to degradation much faster than PTFE ones under microwave treatment. For safety reasons, it is recommanded that the autoclave is equipped with a rupture disk. The autoclave material could be any other non-metallic material able to withstand high pressures and frequent thermal cycles and having low absorbance for microwave irradiation. The autoclave is put in the center of a conventional microwave oven operating at 2455 MHz and having a nominal power of 1000 W. Other frequency or powers may also be used but the time of operation should then be optimized to obtain the required average size of the colloidal panicles. Systems with temperature control are highly recommended.

After each microwave heating treatment, the autoclave is quenched with cold water or simply let to cool down in ambient temperature. The resulting sol is then analyzed for its specific surface area by the Sears's method (G. W. Sears, Analytical Chemistry, 28, 1981, 1956). The average particle diameter is then evaluated by the relation d = K/A. where d is the particle diameter in nm, A is the specific area in m² g⁻¹ and K is 2720. Particle growth may also be followed by measuring the turbidity (absorbance) of the final sols for a specific wavelength. These sols may be further concentrated by evaporation to a maximum level without gelling. This maximum level depends on the specific surface area for a specified pH and Na₂O content. The larger the particles, the higher the final concentration attainable. As an example, a sol with a specific area of 250 m² g⁻¹ may be concentrated to 30 % wt SiO₂(pH=10, Na₂O=0.3 % wt). It is proposed that for the sols with an average particle diameter larger than 12 nm, the quenching-cooling process might be partially substituted with a flashing process, during which cooling and concentration of the sol occur simultaneously.

### Example 1

A commercial sodium silicate solution with a SiO₂/Na₂O molar ratio of 2.85, 62 % wt solid content is diluted to 3.1 % wt by adding distilled water. Some 65 ml of this solution is brought into contact with though H-form PUROLITE C-100 (strong acid cation exchanger resin) in a vessel by mild mixing the mixture for at least 3 minutes to get a stable pH of 2.78. The average particle size in this solution has been measured to be from 2-4 nm by the Sear's method (k=2720). The colloidal solution formed is filtered in order to separate the resin. The pH of the solution is raised to 8.05 by the addition of 0.5 g of a 9.0 % wt NaOH solution. This solution is introduced in a PTFE autoclave with the dimensions shown in figure 1. The sealed autoclave is put in a conventional microwave oven of nominal power of 1000 W and frequency of 2455 MHz. The actual heat input to the solution within the autoclave is evaluated to be about 250 W. Heating is started and continued for 30 seconds. Afterwards the autoclave is quenched in cold water. The specific surface area by the Sears's method is evaluated to be 468.5 m² g⁻¹. This corresponds to an average particle diameter of 5.81 nm (K=2720).

### Example 2

Example 1 is repeated but with a microwave heating duration of 50 seconds. The specific surface area by the Sears's method is evaluated to be 361.7 m² g⁻¹. This corresponds to an average particle diameter of 7.52 nm (K=2720).

### Example 3

Example 1 is repeated but with a microwave heating duration of 70 seconds. The specific surface area by the Sears's method is evaluated to be 283.7 m² g⁻¹. This corresponds to an average particle diameter of 9.59 nm (K=2720).

### Example 4

Example 1 is repeated but with a microwave heating duration of 100 seconds. The specific surface area by the Sears's method is evaluated to be 198.0 m² g⁻¹. This corresponds to an average particle diameter of 13.73 nm (K=2720).

### Example 5

Example 1 is repeated except that the pH of the silica sol is raised to 9. 2 before microwave heat treatment. The specific surface area by the Sears's method is evaluated to be 422.5 m² g⁻¹. This corresponds to an average particle diameter of 6.44 nm (K=2720).

### Example 6

Example 2 is repeated except that the pH of the silica sol is raised to 9. 2 before microwave heat treatment. The specific surface area by the Sears's method is evaluated to be 372.0 m² g⁻¹. This corresponds to an average particle diameter of 7.31 nm (K=2720).

### Example 7

Example 3 is repeated except that the pH of the silica sol is raised to 9. 2 before microwave heat treatment. The specific surface area by the Sears's method is evaluated to be 293.3 m² g⁻¹. This corresponds to an average particle diameter of 9.27 nm (K=2720).

There exists an approximate linear relationship between the average particle diameter and the time of microwave heating. Larger particles may be obtained using longer heating times. It is possible to grow particles larger than 12 nm in less than 120 seconds. The main restricting factor is the autoclave maximum operating pressure. Quartz vessets may used to overcome the fatigue problem well known for the PTFE vessels. The SiO₂/Na₂O molar ratio in examples 1-7 are lower than 30. Molar ratios in the range of 60-130 are preferred for obtaining particles as large as 13nm to avoid partial coagulation of silica.

## Claims

1. A method for increasing the average size d of particles in an aqueous silica sol from 2 to 4 nm up to 13.73 nm, wherein the particle diameter d is evaluated by the relation d = K/A, wherein d is the average particle diameter in nm, K is 2720 and A is the specific area in m² g⁻¹ as measured by the Sear's method, using microwave hydrothermal heating in an autoclave

2. The set forth process as claimed in claim 1 where the autoclave material is PTFE ,quartz or any other non-metallic material able of withstanding high pressures and frequent thermal cycles and having low absorbance for microwave irradiation.

3. The set forth process as claimed in claim 1 where the SiO₂ content of the initial silica sol is 3-6% wt.

4. The set forth process as claimed in claim 1 where the initial silica sol is obtained by ion exchange of a 3-6 % wt aqueous sodium silicate with a SiO₂/Na₂O molar ratio of 2-3.2 with an H-form gel polystyrene sulphonated cation exchange resin.

5. The set forth process as claimed in claim 1 where the initial silica sol has been treated to have a SiO₂ /Na₂O molar ratio of 30-130, preferably 60-130 by the addition of alkali.

6. The set forth process as claimed in claim 1 where the initial silica sol has a pH of 8-9.5.

7. The set forth process as claimed in claim 1 where the hydrothermal heating is performed using a microwave oven with a frequency of 2455 MHz and nominal power of 1000 W.

8. The set forth process as claimed in claim 1 where the duration of the hydrothermal treatment is 30-110 seconds.

## Patentansprüche

1. Eine Methode zur Erhöhung der durchschnittlichen Größe d von Partikeln in einem wässrigen Kieselsäure - Sol von 2 bis 4 nm bis zu 13.73 nm, worin der Partikeldurchmesser d mittels der Beziehung d = K / A bestimmt wird, in der d der durchschnittliche Partikeldurchmesser in nm ist, K gleich 2720 ist und A die spezifische Fläche in m² g-1, bestimmt durch die Methode von Sears, ist, wobei hydrothermisches Heizen mittels Mikrowellen in einem Autoklav benutzt wird.

2. Das dargelegte Verfahren von Anspruch 1, worin das Material des Autoklav PTFE, Quarz oder irgendein anderes nichtmetallisches Material ist, das in der Lage ist, hohen Drücken und häufigen thermischen Zyklen zu widerstehen und eine niedrige Absorption für Mikrowellen - Strahlung aufweist.

3. Das dargelegte Verfahren von Anspruch 1, worin der SiO₂ - Gehalt des ursprünglichen Kieselsäure - Sols 3 - 6 Gewichts - % beträgt.

4. Das dargelegte Verfahren von Anspruch 1, worin das ursprüngliche Kieselsäure - Sol durch Ionenaustausch eines 3 - 6 Gewichts - % - igen wässrigen Natriumsilikats mit einem molaren Verhältnis von SiO₂ / Na₂O von 2 - 3.2 mit einem sulfonierten Polystyrol - Kationen - Austauscher - Gel in der H - Form erhalten wurde.

5. Das dargelegte Verfahren von Anspruch 1, worin das ursprüngliche Kieselsäure - Sol durch Zugabe von Alkali behandelt wurde, um ein molares SiO₂ / Na₂O - Verhältnis von 30 - 130, vorzugsweise von 60 - 130 zu haben.

6. Das dargelegte Verfahren von Anspruch 1, worin das ursprüngliche Kieselsäure - Sol einen pH - Wert von 8 - 9.5 hat.

7. Das dargelegte Verfahren von Anspruch 1, worin das hydrothermische Erhitzen unter Verwendung eines Mikrowelle - Ofens mit einer Frequenz von 2455 MHz und einer Nennleistung von 1000 W durchgeführt wird.

8. Das dargelegte Verfahren von Anspruch 1, worin die Dauer der hydrothermischen Behandlung 30 - 110 Sekunden beträgt.

## Revendications

1. Procédé pour augmenter la taille moyenne des particules d'un sol aqueux de silice, de 2 à 4 nm jusqu'à 13,73 nm, dans lequel le diamètre « d » des particules est évalué par la relation d = K/A dans laquelle d est le diamètre moyen des particules exprimé en nm, K est égal à 2720 et A est la surface spécifique en m².g⁻¹, mesurée par la technique de Sear,
en utilisant un chauffage hydrothermique aux micro-ondes dans un autoclave.

2. Procédé présenté selon la revendication 1, dans lequel le matériau de l'autoclave est le PTFE, le quartz ou tout autre matériau non métallique capable de résister à des hautes pressions et à des cycles thermiques fréquents, et ayant une faible absorbance vis-à-vis de l'irradiation par micro-ondes. -

3. Procédé présenté selon la revendication 1, dans lequel la teneur en SiO₂ du sol de silice initial est de 3 à 6 % en poids.

4. Procédé présenté selon la revendication 1, dans lequel la teneur en SiO₂ du sol de silice initial est obtenue par échange ionique d'un silicate de sodium aqueux à 3-6 % en poids, d'un rapport molaire SiO₂/NaO₂ de 2-3, avec une résine polystyrène sulfoné échangeuse de cations, en gel sous forme H.

5. Procédé présenté selon la revendication 1, dans lequel le sol de silice initial a été traité pour avoir un rapport molaire SiO₂/NaO₂ de 30-130, de préférence de 60-130, par addition d'un alcali.

6. Procédé présenté selon la revendication 1, dans lequel le sol de silice initial a un pH de 8-9,5.

7. Procédé présenté selon la revendication 1, dans lequel le chauffage hydrothermique aux micro-ondes est effectué au moyen d'un four à micro-ondes opérant à une fréquence de 2455 MHz et sous une puissance de 1000 W.

8. Procédé présenté selon la revendication 1, dans lequel la durée du traitement hydrothermique est de 30-110 secondes.
